(19) Europäisches Patentamt
European Patent Office
Office européen des brevets

(11) **EP 2 340 418 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(51) Int Cl.:
**G01D 5/249** *(2006.01)*     **G01D 5/347** *(2006.01)*

(21) Anmeldenummer: **09783339.6**

(22) Anmeldetag: **23.09.2009**

(86) Internationale Anmeldenummer:
**PCT/EP2009/062335**

(87) Internationale Veröffentlichungsnummer:
**WO 2010/049222 (06.05.2010 Gazette 2010/18)**

(54) **ABSOLUTE POSITIONSCODIERUNG UND POSITIONSMESSVORRICHTUNG**

ABSOLUTE POSITION CODE AND POSITION MEASURING DEVICE

CODE D'UNE POSITION ABSOLU ET DISPOSITIF DE MESURE DE POSITIONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.10.2008 DE 102008054042**

(43) Veröffentlichungstag der Anmeldung:
**06.07.2011 Patentblatt 2011/27**

(73) Patentinhaber: **Dr. Johannes Heidenhain GmbH 83301 Traunreut (DE)**

(72) Erfinder: **LINGK, Christoph 83278 Traunstein (DE)**

(56) Entgegenhaltungen:
**EP-B1- 0 368 605**     **WO-A1-96/19872**
**WO-A1-2005/119179**     **DE-C1- 4 022 503**
**US-A- 5 751 230**

EP 2 340 418 B1

**Beschreibung**

Auf vielen Gebieten werden zur Bestimmung der Position zweier relativ zueinander bewegter Körper vermehrt absolute Positionsmessvorrichtungen eingesetzt. Absolute Positionsmessvorrichtungen haben gegenüber rein inkremental messenden Systemen den Vorteil, dass in jeder Relativlage auch nach Unterbrechung der Versorgungsenergie sofort eine korrekte Positionsinformation ausgegeben werden kann.

Die absolute Position wird dabei von einer Positionscodierung verkörpert. Besonders Platz sparend ist die Anordnung der Positionsinformation in einer einzigen Codespur mit in Messrichtung hintereinander angeordneten Codeelementen. Die Codeelemente sind dabei in pseudozufälliger Verteilung hintereinander angeordnet, so dass eine bestimmte Anzahl von aufeinander folgenden Codeelementen jeweils ein Codewort bildet, das die absolute Position eindeutig definiert. Bei der Verschiebung der Abtasteinrichtung relativ zu der Positionscodierung um ein einziges Codeelement wird bereits ein neues Codewort gebildet und über den gesamten absolut zu erfassenden Messbereich steht eine Folge von unterschiedlichen Codewörtern zur Verfügung. Ein derartiger serieller bzw. sequentieller Code wird auch oft als Kettencode oder als Pseudo-Random-Code (PRC) bezeichnet.

Zur Bestimmung der absoluten Position aus den abgetasteten Codewörtern - auch Decodierung genannt - wird eine Decodiertabelle eingesetzt, in der jedem Codewort eine Position zugeordnet ist. Zur Zuordnung der absoluten Position zu einem abgetasteten Codewort bildet das Codewort die Adresse für die Decodiertabelle, so dass am Ausgang die für dieses Codewort abgelegte absolute Position ansteht und zur Weiterverarbeitung zur Verfügung steht. Diese nichtflüchtigen Tabellen können heute in einem ASIC hardwareverdrahtet ausgelegt sein, um einen schnellen Zugriff zu ermöglichen.

Die Anforderungen an die Auflösung von Positionsmessvorrichtungen werden immer höher, so dass innerhalb eines Messbereiches viele Positionen eindeutig zu codieren sind. Je mehr Positionen codiert werden müssen, umso aufwendiger ist die nachfolgende Decodierung. Problematisch bei einer seriellen Codierung ist, dass für eine hohe Auflösung sehr viele verschiedene Codewörter generiert und decodiert werden müssen. Erfolgt die Decodierung mittels Tabellen, ist eine große Tabelle erforderlich, in der für jedes mögliche Codewort eine dazugehörige absolute Position abgelegt ist. Erfolgt die Decodierung mittels eines Rechners, führt dies zu relativ langen Rechenzeiten.

Die EP 0 368 605 B1 beschreibt eine Positionscodierung, mit der bereits relativ große Längen codiert werden können. Die Positionscodierung besteht aus zwei Codesequenzen innerhalb einer einzigen Spur. Die Decodiereinrichtung weist einen ersten Wertevorrat zur Decodierung der ersten Codesequenz sowie einen zweiten Wertevorrat zur Decodierung der zweiten Codesequenz auf. Die absolute Position ist durch die Kombination beider Teilpositionen an jeder Stelle des Messbereichs eindeutig.

Aufgabe der Erfindung ist es, eine absolute Positionsmessvorrichtung anzugeben, mit der innerhalb eines Messbereichs eine Vielzahl von Positionen eindeutig absolut codiert werden können.

Diese Aufgabe wird durch die im Anspruch 1 angegebene absolute Positionsmessvorrichtung gelöst.

Diese hierzu verwendete absolute Positionscodierung umfasst mehrere Codesequenzen unterschiedlicher Längen, die in Kombination einen Messbereich eindeutig absolut codieren, wobei
die mehreren Codesequenzen in einer gemeinsamen Spur angeordnet sind, indem Codeelemente der mehreren Codesequenzen nach einer vorgegebenen Abfolge angeordnet sind, die ein Segment bildet, das innerhalb des Messbereichs wiederum mehrfach hintereinander angeordnet ist, wobei jedes dieser Segmente mindestens drei Codeelemente umfasst. In einer Ausgestaltung der Erfindung sind mehrere Codesequenzen vorgesehen und ein Segment weist jeweils einen Teil einer der mehreren Codesequenzen auf, wobei zumindest einer dieser Teile mehrere aufeinanderfolgende Codeelemente einer der Codesequenzen umfasst.

In einer Ausgestaltung der Erfindung sind mindestens drei Codesequenzen vorgesehen und ein Segment enthält jeweils ein einziges Codeelement jeder dieser Codesequenzen.

Besonders vorteilhaft ist es, wenn die Längen der Codesequenzen teilerfremd sind, insbesondere sich die Längen jeweils zweier Codesequenzen der mehreren Codesequenzen um 1 unterscheiden.

Die Dekodiereinrichtung weist vorzugsweise einen ersten Wertevorrat zur Dekodierung einer ersten Folge von Codewörtern auf, die jeweils bei der Abtastung einer der Codesequenzen sowie ihrer zyklischen Fortsetzung entsteht, und einen zweiten Wertevorrat zur Dekodierung einer zweiten Folge von Codewörtern auf, die jeweils bei der Abtastung einer weiteren der Codesequenzen sowie ihrer zyklischen Fortsetzung entsteht.

Die Detektoranordnung ist vorzugsweise derart ausgebildet, dass diese zumindest ein Codewort der Abtastlänge entsprechend einem ganzzahlig Vielfachen der Länge eines Segmentes generiert.

Zur weiteren Auflösung des mit der absoluten Positionscodierung erhaltenen absoluten Positionswertes ist es vorteilhaft, wenn zusätzlich zur absoluten Positionscodierung zumindest eine Inkrementalspur vorgesehen ist, die eine Inkrementalinformation liefert, welche die Breite eines Codeelementes durch Interpolation weiter auflöst.

Die Positionsmessvorrichtung weist dann in vorteilhafter Weise eine Kombinationseinheit auf, die dazu ausgebildet ist, die aus der absoluten Positionscodierung und der Inkrementalspur gewonnenen Positionswerte zu kombinieren, und eine absolute Gesamtposition zu bilden, welche eine höhere Auflösung besitzt, als der absolute Positionswert.

Weitere vorteilhafte Ausgestaltungen der Erfindung sind in den abhängigen Ansprüchen angegeben.
Anhand der Zeichnungen werden Ausführungsbeispiele der Erfindung näher erläutert.
Es zeigt

Figur 1    eine erste Positionsmessvorrichtung mit einer ersten Positionscodierung in schematischer Darstellung;

Figur 2    eine erste Zuordnung einer abgetasteten Bitfolge;

Figur 3    eine zweite Zuordnung einer abgetasteten Bitfolge;

Figur 4    eine dritte Zuordnung einer abgetasteten Bitfolge;

Figur 5    ein Flussdiagramm und Rechenvorschriften zur Ermittlung der Position mittels der ersten Positionsmessvorrichtung;

Figur 6    ein Diagramm zur Ermittlung der Position aus abgetasteten Bitfolgen (Bitpattern) anhand eines Beispiels der ersten Positionsmessvorrichtung;

Figur 7    eine zweite Positionsmessvorrichtung mit einer zweiten Positionscodierung in schematischer Darstellung;

Figur 8    eine Zuordnung einer abgetasteten Bitfolge der zweiten Positionsmessvorrichtung;

Figur 9    ein Flussdiagramm und Rechenvorschriften zur Ermittlung der Position mittels der zweiten Positionsmessvorrichtung, und

Figur 10   auf zwei Seiten ein Diagramm zur Ermittlung der Position aus abgetasteten Bitfolgen (Bitpattern) anhand eines Beispiels der zweiten Positionsmessvorrichtung.

Bei allen Ausführungen der Erfindung wird das Nonius-Prinzip eingesetzt. Zur absoluten Positionsmessung werden mehrere serielle Codesequenzen verwendet, die verschiedene Längen aufweisen. An jeder Position innerhalb des Messbereichs wird nun die eindeutige absolute Position aus der Kombination von Teilpositionen der mehreren seriellen Codesequenzen gewonnen. Der Vorteil einer derartigen Codierung besteht darin, dass die Decodiereinrichtung jeweils nur die relativ kurzen mehreren seriellen Codesequenzen und ihrer zyklischen Fortsetzungen decodieren muss, und dann die eindeutige Position durch relativ einfache Beziehungen aus diesen decodierten Codesequenzen ermittelt werden kann. Erfolgt die Decodierung mittels Tabellen, sind nur mehrere kleine Tabellen erforderlich. Es sind sehr viel weniger Tabelleneinträge notwendig, als absolute Positionen ausgebbar sind.
Eine Codesequenz ist dabei eine Abfolge von Codeelementen, bei der eine vorgegebene Anzahl aufeinanderfolgender Codeelemente, später Abtastlänge bezeichnet, über die gesamte Codesequenz unterschiedliche und somit eindeutig voneinander unterscheidbare Kombinationen von Bits, später Codewörter bzw. Bitfolgen (Bitpattern) bezeichnet, ergibt.
Aus jedem Codeelement wird also durch Abtastung ein Bit gewonnen, und mehrere aufeinanderfolgende Bits bilden ein Codewort bzw. eine Bilfolge (Bitpattern).

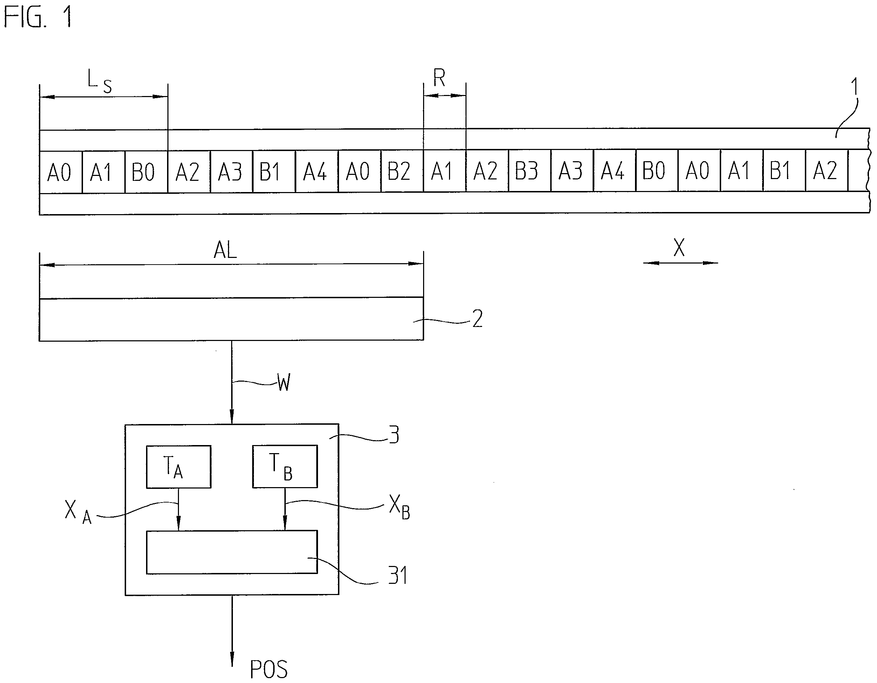

In Figur 1 ist eine erste erfindungsgemäß ausgebildete absolute Positionscodierung 1 einer Längenmessvorrichtung schematisch dargestellt. Die Positionscodierung 1 ist derart ausgebildet, dass sie innerhalb eines Messbereichs an jeder Position eine eindeutige absolute Position POS definiert. Hierzu besteht die Positionscodierung 1 aus einer hintereinander angeordneten Folge von Codeelementen A0 bis A4 bzw. B0 bis B3 gleicher Größe.
Das Prinzip der Positionsmessung beruht auf der Schwebung von mehreren Codesequenzen A, B unterschiedlicher Länge $L_A$ und $L_B$, wobei $L_A$, $L_B$ ganzzahlig und vorzugsweise teilerfremd ist. Die Längen $L_A$ und $L_B$ definieren jeweils die Anzahl der Codeelemente einer Codesequenz A, B. Die maximal zu decodierende Länge $L_{max}$, also die maximale Anzahl an verschiedenen absoluten Positionen, ergibt sich, wenn sich $L_A$ von $L_B$ um 1 unterscheidet.
Die erste Codesequenz A sei mit der Bitfolge

$$A_0A_1A_2A_3...A_{LA-1}$$

der Länge $L_A$, im Beispiel $L_A = 5$ gegeben, und die zweite Codesequenz B durch die Bitfolge

$$B_0B_1B_2B_3...B_{LB-1}$$

der Länge $L_B$, im Beispiel $L_B = 4$.

Hierbei ist $A_i, B_i \in \{0;1\}$.

Die Positionscodierung 1 wird nun dadurch geschaffen, dass Codeelemente der beiden Codesequenzen A, B nach der vorgegebenen Abfolge AAB angeordnet werden. Diese vorgegebene Abfolge besteht in diesem ersten Ausführungsbeispiel also jeweils aus zwei aufeinanderfolgenden Codeelementen der Codesequenz A und einem nachfolgend angeordneten Codeelement der Codesequenz B. Diese Abfolge von Codeelementen bildet somit ein Segment, welches einen Teil der Codesequenz A und einen Teil der Codesequenz B aufweist, wobei zumindest einer dieser Teile mehrere aufeinanderfolgende Codeelemente einer dieser Codesequenzen A bzw. B umfasst. Diese Segmente sind innerhalb des Messbereichs mehrfach hintereinander angeordnet.

Die vollständige Positionscodierung innerhalb des Messbereichs ist somit bei diesem Beispiel:

$$A_0A_1B_0A_2A_3B_1A_4A_0B_2A_1A_2B_3A_3A_4B_0A_0A_1B_1A_2A_3B_2A_4A_0B_3A_1A_2B_0A_3A_4B_1...$$
$$A_0A_1B_2A_2A_3B_3A_4A_0B_0A_1A_2B_1A_3A_4B_2A_0A_1B_3A_2A_3B_0A_4A_0B_1A_1A_2B_2A_3A_4B_3$$

Die Positionscodierung 1 besteht somit aus einzelnen Segmenten AAB. Ein Segment hat in diesem Beispiel eine Länge $L_S=3$.

Die maximale Zahl an codierbaren Positionen ist damit:

$$L_{max} = L_S * KGV(L_A, L_B) = 3 * KGV(5, 4) = 3 * 5 * 4 = 60$$

mit KGV = kleinstes gemeinsames Vielfaches

Zur Positionsmessung wird die Positionscodierung 1 beispielsweise optisch abgetastet, indem die Codeelemente ein Lichtbündel positionsabhängig modulieren, so dass am Ort einer Detektoranordnung 2 einer Abtasteinrichtung eine positionsabhängige Lichtverteilung entsteht, die von der Detektoranordnung 2 in elektrische Abtastsignale w gewandelt wird. Die Detektoranordnung 2 ist ein Zeilensensor, mit einer in Messrichtung X angeordneten Folge von Detektorelementen. Die Detektorelemente sind derart ausgebildet, dass jedem der Codeelemente der Breite R innerhalb einer Abtastlänge AL in jeder Relativlage zumindest eines der Detektorelemente eindeutig zugeordnet ist, und somit aus jedem der Codeelemente innerhalb der Abtastlänge AL ein Bit 0 oder 1 gewonnen werden kann. Hierzu sind beim optischen Abtastprinzip die Codeelemente reflektierend oder nichtreflektierend, bzw. opak oder nichtopak, wobei den reflektierenden Codeelementen beispielsweise der Bitwert 1 und den nichtreflektierenden Codeelementen der Bitwert 0 zugeordnet wird. Die Abfolge dieser Bits (Bitpattern) einer Codesequenz A, B, deren Anzahl abhängig von der Abtastlänge AL ist, bildet für die beiden Codesequenzen A, B jeweils ein Codewort w. Die Abtastsignale, also die Codeworte w werden einer Decodiereinrichtung 3 zugeführt, welche aus jedem der Codeworte w einer der Codesequenzen A, B eine Teilposition $x_A$, $x_B$ ableitet und aus diesen Teilpositionen $x_A$, $x_B$ dann daraus eine absolute Position POS bildet. Bei einer Verschiebung der Detektoranordnung 2 gegenüber der Positionscodierung 1 um die Breite bzw. Länge R eines Codeelementes A, B wird zumindest aus einer der Codesequenzen A, B ein neues Codewort w erzeugt.

Die Anzahl der abgetasteten Codeelemente der Positionscodierung 1 wird Abtastlänge AL bezeichnet und ist vorzugsweise derart gewählt, dass bei Bewegung der Detektoranordnung 2 über die Positionscodierung 1 das, was auf der einen Seite "herausläuft" auf der anderen Seite wieder "hereinkommt". Das heißt, dass die Abtastlänge AL ein ganzzahlig Vielfaches von $L_S$ sein sollte:

$$AL = n * L_S, \text{ mit } n = \text{ganzzahlig}$$

Die Codesequenzen A und B, also die Abfolge der Codeelemente, sowie die Abtastlänge AL sind derart gewählt, dass innerhalb einer gesamten Codesequenz A, B an jeder Position in Schritten der Breite R eines Codeelementes ein eindeutiges Wort generiert wird, das sich von allen anderen Wörtern dieser Codesequenz A, B unterscheidet, und dass innerhalb dieser Codesequenz A, B an jeder Position in Schritten der Breite R ein eindeutiges Wort generiert wird, das sich von allen anderen Wörtern dieses Abschnitts unterscheidet.

In dem hier dargestellten Beispiel sei angenommen, dass die Abtastlänge

AL=9;

$L_S=3$;

n=3

Zur Decodierung der Codewörter w weist die Decodiereinrichtung 3 zwei Tabellen $T_A$, $T_B$ auf, die Tabelle $T_A$ für die Codesequenz A und die Tabelle $T_B$ für die Codesequenz B.

Die Decodiertabellen für die beiden Codesequenzen A, B sehen damit wie folgt aus:

Tabelle $T_A$ für Codesequenz A:

| Bitpattern | Teilposition $x_A$ |
|---|---|
| $A_0A_1A_2A_3A_4A_0$ | 0 |
| $A_1A_2A_3A_4A_0A_1$ | 1 |
| $A_2A_3A_4A_0A_1A_2$ | 2 |
| $A_3A_4A_0A_1A_2A_3$ | 3 |
| $A_4A_0A_1A_2A_3A_4$ | 4 |

Tabelle $T_B$ für Codesequenz B:

| Bitpattern | Teilposition $x_B$ |
|---|---|
| $B_0B_1B_2$ | 0 |
| $B_1B_2B_3$ | 1 |
| $B_2B_3B_0$ | 2 |
| $B_3B_0B_1$ | 3 |

Bei der Decodierung müssen nun drei (= $L_S$) Fälle betrachtet werden, wobei das abgetastete Wort w mit der Abtastlänge AL=9 wie folgt bezeichnet sei:

$$K_0K_1K_2K_3K_4K_5K_6K_7K_8$$

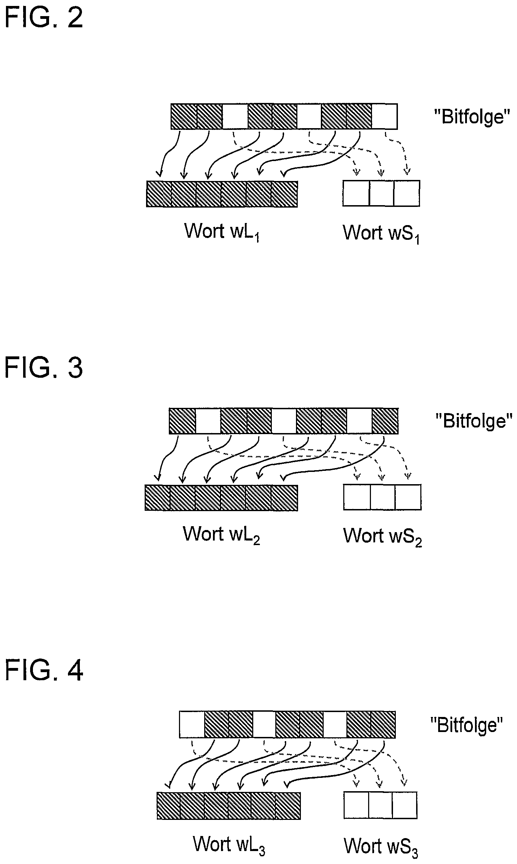

1. Fall:
Wie in Figur 2 dargestellt, wird die Bitfolge (Bitpattern) $K_0K_1K_3K_4K_6K_7$ in Wort $wL_1$ einsortiert und $K_2K_5K_8$ in Wort $wS_1$.

2. Fall:
Wie in Figur 3 dargestellt, wird die Bitfolge (Bitpattern) $K_0K_2K_3K_5K_6K_8$ in Wort $wL_2$ einsortiert und $K_1K_4K_7$ in Wort $wS_2$.

3. Fall:
Wie in Figur 4 dargestellt, wird die Bitfolge (Bitpattern) $K_1K_2K_4K_5K_7K_8$ in Wort $wL_3$ einsortiert und $K_0K_3K_6$ in Wort $wS_3$.

Es müssen alle sechs Wörter $wL_1$, $wL_2$, $wL_3$ und $wS_1$, $wS_2$, $wS_3$ gebildet werden.

Der Decodier-Algorithmus ist nun so aufgebaut, dass die Worte $wL_1$, $wL_2$ und $wL_3$ in Tabelle $T_A$, sowie die Worte $wS_1$, $wS_2$ und $wS_3$ in der Tabelle $T_B$ gesucht werden. Nur wenn in einer der oben genannten 3 Möglichkeiten die entsprechenden Wörter in den entsprechenden Tabellen gefunden wurden, kann eine Position POS ermittelt werden.

Aus den mittels der Tabellen $T_A$, $T_B$ ermittelten Teilpositionen $x_A$, $x_B$ wird mittels einer Kombinationseinheit 31 die absolute Position POS ermittelt.

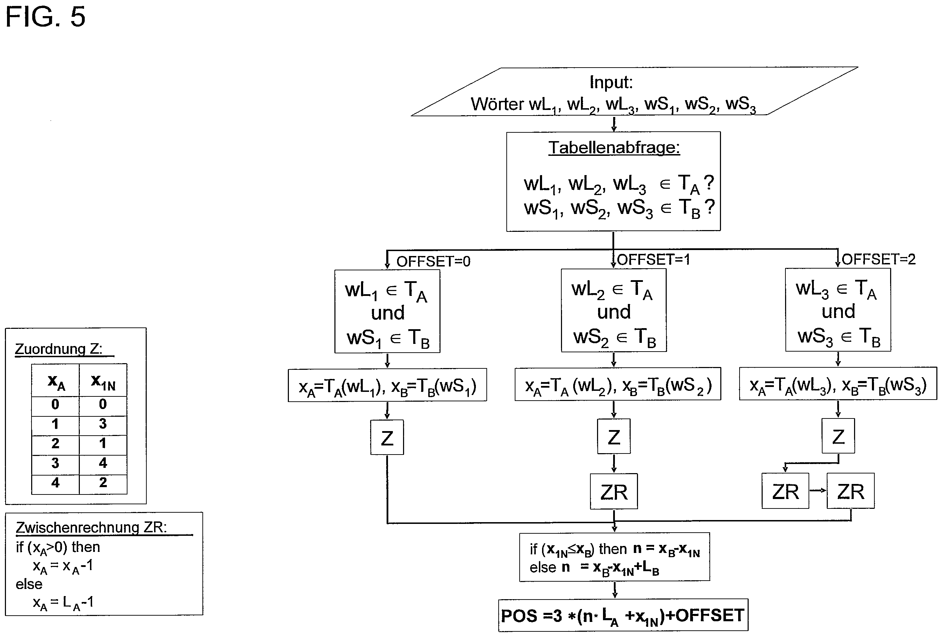

Ein möglicher Algorithmus zur Ermittlung der absoluten Position POS ist beispielhaft in Figur 5 dargestellt.

Abschließend zu diesem Ausführungsbeispiel wird nun noch eine konkrete Positionscodierung als Beispiel angegeben. Es sei wieder $L_A$=5 und $L_B$=4.

Codesequenz A: 00100
Codesequenz B: *1101*

Die gesamte Positionscodierung ist damit (die Codeelemente der Codesequenz B sind dabei zur Unterscheidung von den Codeelementen der Codesequenz A kursiv dargestellt):

00*1*10*1*000*1*100*1*00*11*0000*1*01*1*00*1*000*1*0*1*00*1*0*11*00000*11*0*1*00*1*0*1*000*1*

Die Positionscodierung besteht somit aus den aufeinanderfolgenden Segmenten, von denen jedes jeweils aus zwei Codeelementen der Codesequenz A und einem Codeelement der Codesequenz B zusammengesetzt ist:

00*1*
10*1*
00*0*
00*1*
01*0*
00*1*

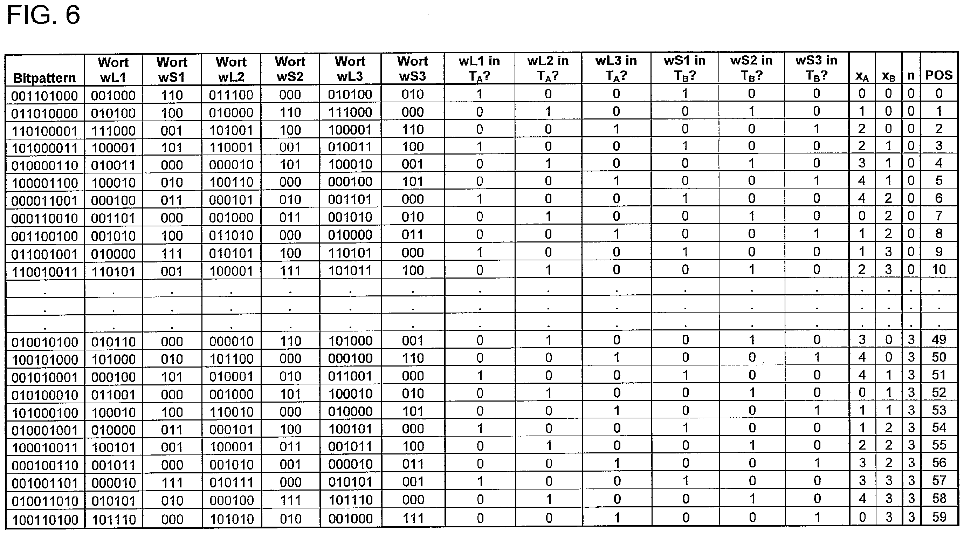

Figur 6 zeigt ein Diagramm zur Ermittlung der Position POS aus den gelesenen Bitpattern (Wörtern) mit dem in Figur 5 gezeigten Algorithmus, wobei das abgelesene Bitpattern aus neun Bits (=AL) besteht.

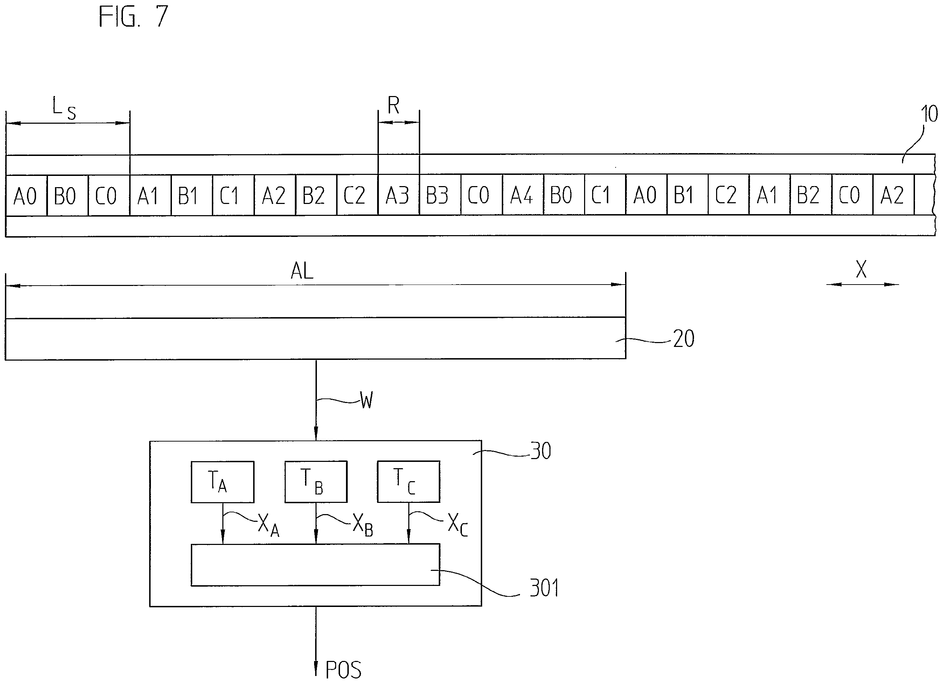

Anhand der Figur 7 wird ein zweites Ausführungsbeispiel der Erfindung erläutert. Dabei sind mindestens drei Codesequenzen vorgesehen und ein Segment umfasst jeweils ein einziges Codeelement dieser Codesequenzen. Im konkreten Beispiel sind drei Codesequenzen A, B und C vorgesehen. Dabei ist $L_A > L_B > L_C$

Die Längen $L_A$, $L_B$ und $L_C$ definieren auch hier jeweils die Anzahl der Codeelemente der entsprechenden Codesequenz A, B, C.

Die erste Codesequenz A sei mit der Bitfolge

$$A_0A_1A_2A_3...A_{LA-1}$$

der Länge $L_A$ gegeben, und die zweite Codesequenz B durch die Bitfolge $B_0B_1B_2B_3...B_{LB-1}$
der Länge $L_B$ gegeben, und die dritte Codesequenz C durch die Bitfolge $C_0C_1...C_{LC-1}$
der Länge $L_C$.

Hierbei ist wieder $A_i$, $B_i$, $C_i \in \{0;1\}$.

Die Codesequenzen A, B und C, also die Abfolge der Codeelemente, sowie die Abtastlänge AL sind derart gewählt, dass innerhalb einer gesamten Codesequenz A, B, C an jeder Position in Schritten der Breite R eines Codeelementes ein eindeutiges Wort generiert wird, das sich von allen anderen Wörtern dieser Codesequenz A, B, C unterscheidet, und dass innerhalb dieser Codesequenz A, B, C an jeder Position in Schritten der Breite R ein eindeutiges Wort generiert wird, das sich von allen anderen Wörtern dieser Codesquenz unterscheidet.

Die Positionscodierung 10 wird nun dadurch erzeugt, dass immer abwechselnd ein Codeelement aus den drei Codesequenzen A, B, C genommen wird:

$A_0B_0C_0A_1B_1C_1A_2B_2C_2A_3B_3C_0A_4B_0C_1A_0B_1C_2A_1B_2C_0A_2B_3C_1A_3B_0C_2A_4B_1C_0...$
$A_0B_2C_1A_1B_3C_2A_2B_0C_0A_3B_1C_1A_4B_2C_2A_0B_3C_0A_1B_0C_1A_2B_1C_2A_3B_2C_0A_4B_3C_1...$
$A_0B_0C_2A_1B_1C_0A_2B_2C_1A_3B_3C_2A_4B_0C_0A_0B_1C_1A_1B_2C_2A_2B_3C_0A_3B_0C_1A_4B_1C_2...$
$A_0B_2C_0A_1B_3C_1A_2B_0C_2A_3B_1C_0A_4B_2C_1A_0B_3C_2A_1B_0C_0A_2B_1C_1A_3B_2C_2A_4B_3C_0...$
$A_0B_0C_1A_1B_1C_2A_2B_2C_0A_3B_3C_1A_4B_0C_2A_0B_1C_0A_1B_2C_1A_2B_3C_2A_3B_0C_0A_4B_1C_1...$
$A_0B_2C_2A_1B_3C_0A_2B_0C_1A_3B_1C_2A_4B_2C_0A_0B_3C_1A_1B_0C_2A_2B_1C_0A_3B_2C_1A_4B_3C_2$

Entsprechend der obigen Notation ist hier die Länge eines Segments $L_S=3$.

Für die maximale Anzahl an codierbaren Positionen gilt nun:

$$L_{max} = L_S * KGV(L_A,L_B,L_C)$$

mit KGV = kleinstes gemeinsames Vielfaches

Da hier $L_A$, $L_B$ und $L_C$ teilerfremd sind, gilt nun

$$L_{max} = 3 * L_A * L_B * L_C = 180 \text{ Positionen.}$$

In diesem dargestellten Beispiel ist die Abtastlänge AL = 5 * $L_S$ = 15.

Die Tabelle $T_A$, $T_B$ und $T_C$ für die Codesequenzen A, B, C sehen damit wie folgt aus:

Tabelle $T_A$ für Codesequenz A:

| Bitpattern | Teilposition $x_A$ |
|---|---|
| $A_0A_1A_2A_3A_4$ | 0 |
| $A_1A_2A_3A_4A_0$ | 1 |

(fortgesetzt)

| Bitpattern | Teilposition $x_A$ |
|---|---|
| $A_2A_3A_4A_0A_1$ | 2 |
| $A_3A_4A_0A_1A_2$ | 3 |
| $A_4A_0A_1A_2A_3$ | 4 |

Tabelle $T_B$ für Codesequenz B:

| Bitpattern | Teilposition $x_B$ |
|---|---|
| $B_0B_1B_2B_3B_0$ | 0 |
| $B_1B_2B_3B_0B_1$ | 1 |
| $B_2B_3B_0B_1B_2$ | 2 |
| $B_3B_0B_1B_2B_3$ | 3 |

Tabelle $T_C$ für Codesequenz C:

| Bitpattern | Teilposition $x_C$ |
|---|---|
| $C_0C_1C_2C_0C_1$ | 0 |
| $C_1C_2C_0C_1C_2$ | 1 |
| $C_2C_0C_1C_2C_0$ | 2 |

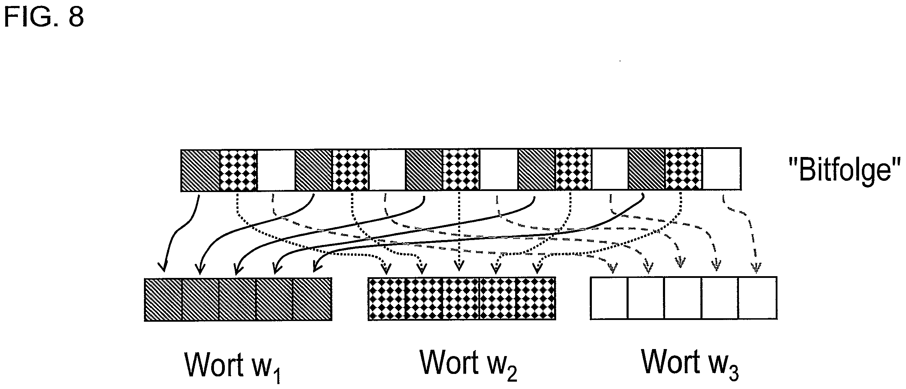

Zur Decodierung werden zunächst aus der abgetasteten Bitfolge die drei Einzelwörter $w_1$, $w_2$ und $w_3$ gebildet, wie in Figur 8 dargestellt ist.

Die drei Worte $w_1$, $w_2$ und $w_3$ werden nun in den drei Tabellen $T_A$, $T_B$ und $T_C$ gesucht, das heißt, dass insgesamt neun Suchoperationen stattfinden:

$$w_1 \rightarrow T_A; w_1 \rightarrow T_B; w_1 \rightarrow T_C$$
$$w_2 \rightarrow T_A; w_2 \rightarrow T_B; w_2 \rightarrow T_C$$
$$w_3 \rightarrow T_A; w_3 \rightarrow T_B; w_3 \rightarrow T_C$$

Die Berechnung der Gesamtposition geschieht dann in zwei Stufen. Zunächst wird die Codesequenz A und B genommen und eine Position $p_{12}$ aus der Schwebung dieser Codesequenzen A, B berechnet. Entsprechend kann man eine Länge $L_{12}=KGV(L_A,L_B)$ definieren. Das gleiche geschieht mit den Codesequenzen B und C, woraus eine Position $p_{23}$ berechnet wird und $L_{23}=KGV(L_B,L_C)$.

Die Gesamtposition POS der Positionscodierung 10 berechnet sich in einem zweiten Schritt dann als Schwebung aus $p_{12}$ und $p_{23}$.

In dem hier gewählten Beispiel ist $L_{12}=KGV(5,4)=20$ und $L_{23}=KGV(4,3)=12$.

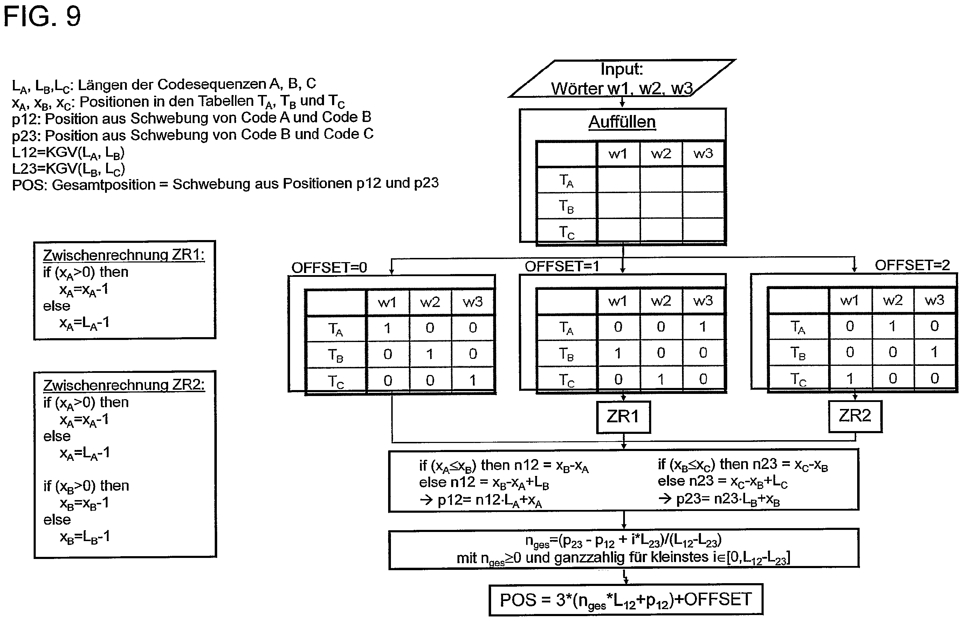

Ein mögliches Flussdiagramm zur Berechnung der Gesamtposition POS ist in Figur 9 beispielhaft dargestellt.

Abschließend zu diesem zweiten Ausführungsbeispiel wird nun noch eine konkrete Positionscodierung 10 angegeben. Es sei

$$L_A=5$$
$$L_B=4$$
$$L_C=3$$

Codesequenz A: 00010
Codesequenz B: *0110*
Codesequenz C: **101**

Die gesamte Positionscodierung 10 ist damit (der Teil der Codesequenz B ist dabei zur Unterscheidung kursiv dargestellt und der Teil der Codesequenz C ist fett dargestellt):

0010100111010000110110001010110100010011100110010000111111000
0010110101010001010011001100011011000001111010001001010111001
0000110111000010110100011010100110010001110110000010111100001

Die Positionscodierung 10 weist die aufeinanderfolgenden Segmente, jeweils zusammengesetzt aus einem Codeelement der Codesequenz A, einem Codeelement der Codesequenz B und einem Codeelement der Codesequenz C, auf:

001
010
011
101
000
011
011
000
101
011
010
001
001
110
011
001

Die Tabellen sind:

Codesequenz A: → Tabelle $T_A$

| Bitpattern | Teilposition $X_A$ |
|---|---|
| 00010 | 0 |
| 00100 | 1 |
| 01000 | 2 |
| 10000 | 3 |
| 00001 | 4 |

Codesequenz B: → Tabelle $T_B$

| Bitpattern | Teilposition $X_B$ |
|---|---|
| 01100 | 0 |
| 11001 | 1 |
| 10011 | 2 |
| 00110 | 3 |

Codesequenz C: → Tabelle $T_C$

| Bitpattern | Teilposition $X_C$ |
|---|---|
| 10110 | 0 |
| 01101 | 1 |

(fortgesetzt)

| Bitpattern | Teilposition X$_C$ |
|------------|--------------------|
| 11011 | 2 |

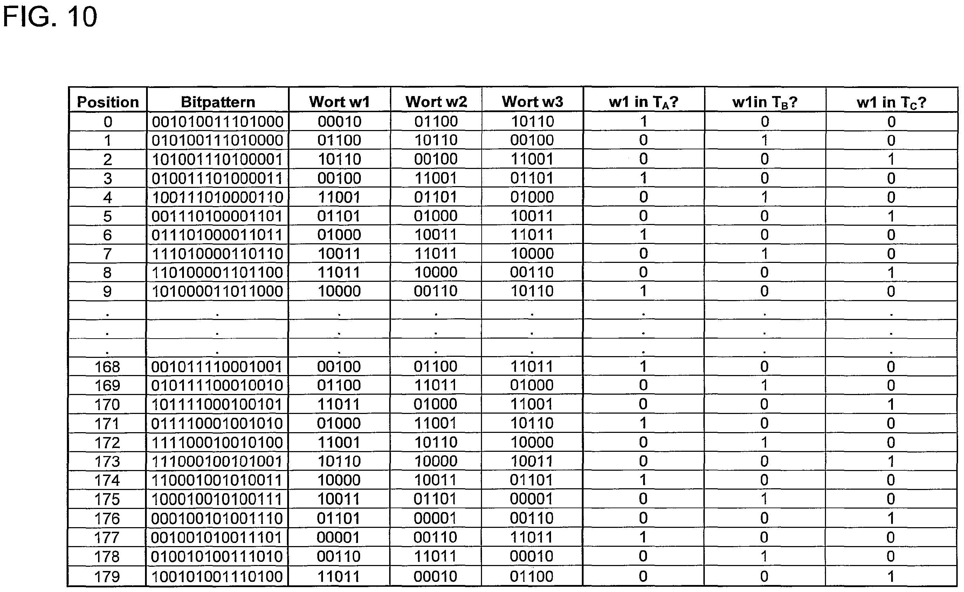

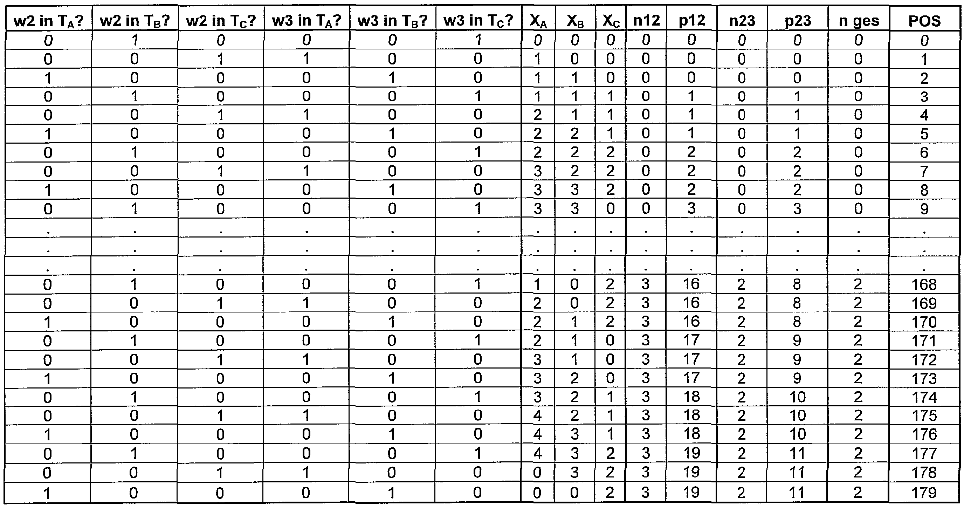

Figur 10 zeigt auf dem Zeichnungsblatt 8/9 und der Fortsetzung auf dem Zeichnungsblatt 9/9 ein Diagramm zur Ermittlung der Position POS aus den gelesenen Bitpattern (Wörtern) mit dem in Figur 9 gezeigten Algorithmus, wobei das abgelesene Bitpattern aus fünfzehn Bits (=AL) besteht.

Soll der durch die Codesequenzen A, B (erstes Ausführungsbeispiel) bzw. A, B, C (zweites Ausführungsbeispiel) ermittelte Positionsmesswert POS weiter aufgelöst werden, kann die oben beschriebene Winkelcodierung 1 bzw. 10 durch eine weitere Spur oder mehrere weitere Spuren mit absoluten Codierungen oder mit Inkrementalteilungen ergänzt sein.

Vorteilhaft kann es auch sein, aus der absoluten Positionscodierung 1 bzw. 10 zusätzlich ein periodisches Inkrementalsignal abzuleiten.

Die Decodiereinrichtung 3, 30 ist vorteilhaft als ASIC ausgebildet, wobei die erforderlichen Tabellen T, also die erforderlichen Wertevorräte, jeweils bei der Fertigung des ASIC's fest verdrahtet ausgebildet sind. Alternativ können die Tabellen T bzw. Wertevorräte aber auch in Festwertspeichern, wie EPROM abgelegt sein.

Die Erfindung ist beim optischen Abtastprinzip besonders vorteilhaft einsetzbar, da eine optisch abtastbare Positionscodierung 1, 10 mit maximal möglich verschiedenen Positionen reproduzierbar herstellbar ist und damit eine besonders hochauflösende Positionsmessung ermöglicht wird. Dabei kann die Detektoranordnung 2, 20 und die Decodiereinrichtung 3, 30 gemeinsam in einem Opto-ASIC untergebracht sein.

Die Erfindung ist aber nicht auf das optische Abtastprinzip beschränkt, sondern auch bei magnetischen, induktiven sowie kapazitiven Abtastprinzipien einsetzbar.

Weiterhin kann die absolute Positionscodierung zur Winkelmessung oder zur Längenmessung ausgebildet sein und somit die Positionsmessvorrichtung eine Winkelmessvorrichtung oder eine Längenmessvorrichtung sein.

Ist die Positionscodierung eine Winkelcodierung, so gibt es zwei Möglichkeiten, die Codesequenzen über 360° anzuordnen.

Die erste Möglichkeit besteht darin, dass alle Codesequenzen innerhalb von 360° mehrfach vollständig aufgetragen sind. Bei dieser Ausführung ist die Decodierung besonders einfach, da innerhalb der 360° nur Codewörter auftreten, die in den oben dargestellten Tabellen enthalten sind. Der Grund dafür ist, dass sich an eine Codesequenz der Codesequenzen jeweils der Anfang der nächsten Codesequenz dieser Codesequenzen anschließt (z. B. Ende einer der Codesequenzen A → Anfang der nächsten Codesequenz A). Dabei sind alle Codesequenzen innerhalb 360° zyklisch fortgesetzt.

Die zweite Möglichkeit besteht darin, dass zumindest eine der Codesequenzen innerhalb von 360° nur teilweise aufgetragen ist, also abgeschnitten ist. Der verbliebene Teil dieser Codesequenz ist also mit einem Anfang dieser Codesequenz fortgesetzt, wobei diese Fortsetzung somit keine zyklische Fortsetzung ist. In diesem Fall ist zur vollständigen Decodierung zusätzlich zu den oben offenbarten Tabellen ein weiterer Wertevorrat erforderlich. Dieser weitere Wertevorrat dient zur Decodierung der am Stoß (z.B. Ende des verbliebenen Teils der abgeschnittenen Codesequenz A → Anfang der nächsten Codesequenz A) bei der Abtastung neu entstehenden Codewörter.

**Patentansprüche**

1. Absolute Positionsmessvorrichtung mit
einer absoluten Positionscodierung (1, 10), umfassend mehrere Codesequenzen (A, B, C) unterschiedlicher Längen (L$_A$, L$_B$, L$_C$), die in Kombination einen Messbereich eindeutig absolut codierten, wobei die Längen (L$_A$, L$_B$, L$_C$) jeweils durch die Anzahl der Codeelemente einer Codesequenz (A, B, C) definiert sind,
die Codeelemente jeweils die gleiche Größe (R) aufweisen, und
die mehreren Codesequenzen (A, B, C) in einer gemeinsamen Spur angeordnet sind, indem Codeelemente der mehreren Codesequenzen (A, B, C) nach einer vorgegebenen Abfolge angeordnet sind, die ein Segment bildet, das innerhalb des Messbereichs wiederum mehrfach hintereinander angeordnet ist, wobei jedes dieser Segmente einen Teil der mehreren Codesequenzen (A, B, C) sowie mindestens drei Codeelemente umfasst;
einer Detektoranordnung (2, 20) zur Abtastung der Positionscodierung (1, 10) und zur Generierung von Codewörtern (w), und
einer Dekodiereinrichtung (3, 30) zur Dekodierung der Codewörter (w), die jeweils bei der Abtastung der Codesequenzen (A, B, C) sowie ihrer zyklischen Fortsetzung entstehen und zur Generierung von Positionswerten (POS).

2. Absolute Positionsmessvorrichtung nach Anspruch 1, **dadurch gekennzeichnet, dass** mindestens drei Codesequenzen (A, B, C) vorgesehen sind, und das Segment jeweils ein einziges Codeelement dieser Codesequenzen (A, B, C) enthält.

3. Absolute Positionsmessvorrichtung nach Anspruch 1, **dadurch gekennzeichnet, dass** das Segment jeweils einen Teil der mehreren Codesequenzen (A, B) aufweist, und zumindest einer dieser Teile mehrere aufeinanderfolgende Codeelemente einer der Codesequenzen (A) umfasst.

4. Absolute Positionsmessvorrichtung nach einem der vorhergehenden Ansprüche, **dadurch gekennzeichnet, dass** die Längen ($L_A$, $L_B$, $L_C$) der Codesequenzen (A, B, C) derart gewählt sind, dass die Längen ($L_A$, $L_B$, $L_C$) teilerfremd sind.

5. Absolute Positionsmessvorrichtung nach einem der Ansprüche 1 bis 3, **dadurch gekennzeichnet, dass** sich die Längen ($L_A$, $L_B$, $L_C$) jeweils zweier Codesequenzen (A, B, C) der mehreren Codesequenzen (A, B, C) um 1 unterscheiden.

6. Absolute Positionsmessvorrichtung nach einem der Ansprüche 1 bis 5, wobei die Dekodiereinrichtung (3, 30) einen ersten Wertevorrat ($T_A$) zur Dekodierung einer ersten Folge von Codewörtern ($w_A$) aufweist, die jeweils bei der Abtastung einer der Codesequenzen (A) sowie ihrer zyklischen Fortsetzung entsteht, und

die Dekodiereinrichtung (3, 30) zumindest einen zweiten Wertevorrat ($T_B$) zur Dekodierung einer zweiten Folge von Codewörtern ($w_B$) aufweist, die jeweils bei der Abtastung einer weiteren der Codesequenzen (B) sowie ihrer zyklischen Fortsetzung entsteht.

7. Absolute Positionsmessvorrichtung nach einem der Ansprüche 1 bis 6, wobei die Detektoranordnung (2, 20) derart ausgebildet ist, dass diese zumindest ein Codewort (w) der Abtastlänge (AL) entsprechend einem ganzzahlig Vielfachen der Länge ($L_S$) eines Segmentes generiert.

8. Absolute Positionsmessvorrichtung nach einem der Ansprüche 1 bis 7, wobei die Positionscodierung (1, 10) durch zumindest eine Inkrementalspur ergänzt ist.

9. Absolute Positionsmessvorrichtung nach Anspruch 8, **dadurch gekennzeichnet, dass** eine Kombinationseinheit vorgesehen ist, die dazu ausgebildet ist, aus dem durch Abtastung der absoluten Positionscodierung (1, 10) gewonnenen absoluten Positionswert (POS) und aus der durch Abtastung der Inkrementalspur gewonnenen Inkrementalinformation eine absolute Gesamtposition zu bilden, welche eine höhere Auflösung besitzt, als der absolute Positionswert (POS).

## Claims

1. Absolute position measuring apparatus comprising an absolute position encoding (1, 10), comprising a plurality of code sequences (A, B, C) of different lengths ($L_A$, $L_B$, $L_C$), which in combination unambiguously effect absolute encoding of a measurement range, wherein
the lengths ($L_A$, $L_B$, $L_C$) are defined in each case by the number of code elements of a code sequence (A, B, C), the code elements in each case have the same size (R), and
the plurality of code sequences (A, B, C) are arranged in a common track by virtue of the fact that code elements of the plurality of code sequences (A, B, C) are arranged according to a predefined succession which forms a segment which in turn is arranged repeatedly one after another within the measurement range, wherein each of said segments comprises a portion of the plurality of code sequences (A, B, C) and also at least three code elements; a detector arrangement (2, 20) for scanning the position encoding (1, 10) and for generating code words (w), and a decoding device (3, 30) for decoding the code words (w) which arise in each case upon the scanning of the code sequences (A, B, C) and the cyclic continuation thereof and for generating position values (POS).

2. Absolute position measuring apparatus according to Claim 1, **characterized in that** at least three code sequences (A, B, C) are provided and the segment in each case contains a single code element of said code sequences (A, B, C).

3. Absolute position measuring apparatus according to Claim 1, **characterized in that** the segment in each case has a portion of the plurality of code sequences (A, B), and at least one of said portions comprises a plurality of successive code elements of one of the code sequences (A).

4. Absolute position measuring apparatus according to any of the preceding claims, **characterized in that** the lengths ($L_A$, $L_B$, Lc) of the code sequences (A, B, C) are chosen in such a way that the lengths ($L_A$, $L_B$, $L_C$) are relatively prime.

5. Absolute position measuring apparatus according to any of Claims 1 to 3, **characterized in that** the lengths ($L_A$, $L_B$, Lc) of in each case two code sequences (A, B, C) of the plurality of code sequences (A, B, C) differ by 1.

6. Absolute position measuring apparatus according to any of Claims 1 to 5, wherein the decoding device (3, 30) has a first set of values ($T_A$) for decoding a first sequence of code words ($w_A$), which arises in each case upon the scanning of one of the code sequences (A) and the cyclic continuation thereof, and
The decoding device (3, 30) has at least one second set of values ($T_B$) for decoding a second sequence of code words ($w_B$), which arises in each case upon the scanning of another of the code sequences (B) and the cyclic continuation thereof.

7. Absolute position measuring apparatus according to any of Claims 1 to 6, wherein the detector arrangement (2, 20) is configured in such a way that it generates at least one code word (w) of the scanning length (AL) corresponding to an integer multiple of the length (Ls) of a segment.

8. Absolute position measuring apparatus according to any of Claims 1 to 7, wherein the position encoding (1, 10) is supplemented by at least one incremental track.

9. Absolute position measuring apparatus according to Claim 8, **characterized in that** a combination unit is provided, which is configured to form an absolute overall position from the absolute position value (POS) obtained by the scanning of the absolute position encoding (1, 10) and from the incremental information obtained by the scanning of the incremental track, said absolute overall position having a higher resolution than the absolute position value (POS).

**Revendications**

1. Dispositif de mesure de position absolue, comprenant
un codage de position absolu (1, 10), comportant plusieurs séquences de code (A, B, C) de longueurs ($L_A$, $L_B$, $L_C$) différentes qui, combinées, réalisent un codage absolu d'une plage de mesure, les longueurs ($L_A$, $L_B$, $L_C$) étant respectivement définies par le nombre d'éléments de code d'une séquence de code (A, B, C),
les éléments de code possédant respectivement la même taille (R), et
les plusieurs séquences de code (A, B, C) étant disposées dans une piste commune en ce que les éléments de code des plusieurs séquences de code (A, B, C) sont disposés selon une succession prédéfinie qui forme un segment, lequel est à son tour disposé plusieurs fois l'un derrière l'autre à l'intérieur de la plage de mesure, chacun de ces segments comprenant une partie des plusieurs séquences de code (A, B, C) ainsi qu'au moins trois éléments de code ;
un arrangement détecteur (2, 20) destiné à palper le codage de position (1, 10) et à générer des mots de code (w), et
un appareil décodeur (3, 30) destiné à décoder les mots de code (w) qui sont respectivement produits lors du palpage des séquences de code (A, B, C) ainsi que de leur continuation cyclique et à générer des valeurs de position (POS).

2. Dispositif de mesure de position absolue selon la revendication 1, **caractérisé en ce qu'**il existe au moins trois séquences de code (A, B, C) et le segment contient respectivement un élément de code unique de ces séquences de code (A, B, C).

3. Dispositif de mesure de position absolue selon la revendication 1, **caractérisé en ce que** le segment possède respectivement une partie des plusieurs séquences de code (A, B) et au moins l'une de ces parties comporte plusieurs éléments successifs de l'une des séquences de code (A).

4. Dispositif de mesure de position absolue selon l'une des revendications précédentes, **caractérisé en ce que** les longueurs ($L_A$, $L_B$, $L_C$) des séquences de code (A, B, C) sont choisies de telle sorte que les longueurs ($L_A$, $L_B$, Le) soient non divisibles.

5. Dispositif de mesure de position absolue selon l'une des revendications 1 à 3, **caractérisé en ce que** les longueurs ($L_A$, $L_B$, Le) de deux séquences de code (A, B, C) respectives des plusieurs séquences de code (A, B, C) présentent une différence mutuelle égale à 1.

6.  Dispositif de mesure de position absolue selon l'une des revendications 1 à 5, l'appareil décodeur (3, 30) possédant une première réserve de valeurs ($T_A$) destinée à décoder une première série de mots de code ($w_A$), laquelle est respectivement produite lors du palpage de l'une des séquences de code (A) ainsi que de sa continuation cyclique, et l'appareil décodeur (3, 30) possédant au moins une deuxième réserve de valeurs ($T_B$) destinée à décoder une deuxième série de mots de code ($w_B$), laquelle est respectivement produite lors du palpage d'une autre des séquences de code (B) ainsi que de sa continuation cyclique.

7.  Dispositif de mesure de position absolue selon l'une des revendications 1 à 6, l'arrangement détecteur (2, 20) étant configuré de telle sorte que celui-ci génère au moins un mot de code (w) de la longueur de palpage (AL) correspondant à un multiple entier de la longueur ($L_S$) d'un segment.

8.  Dispositif de mesure de position absolue selon l'une des revendications 1 à 7, le codage de position (1, 10) étant complété par au moins une piste incrémentale.

9.  Dispositif de mesure de position absolue selon la revendication 8, **caractérisé en ce qu'**il existe une unité de combinaison qui est configurée pour former, à partir de la valeur de position absolue (POS) obtenue par le palpage du codage de position (1, 10) absolu et à partir de l'information incrémentale obtenue par le palpage de la piste incrémentale, une position globale absolue qui possède une résolution supérieure à celle de la valeur de position absolue (POS).

EP 2 340 418 B1

FIG. 1

## FIG. 2

Wort wL₁            Wort wS₁

## FIG. 3

Wort wL₂            Wort wS₂

## FIG. 4

Wort wL₃            Wort wS₃

# FIG. 5

Input:
Wörter $wL_1$, $wL_2$, $wL_3$, $wS_1$, $wS_2$, $wS_3$

Tabellenabfrage:

$wL_1$, $wL_2$, $wL_3 \in T_A$ ?
$wS_1$, $wS_2$, $wS_3 \in T_B$ ?

OFFSET=0

$wL_1 \in T_A$
und
$wS_1 \in T_B$

$x_A = T_A(wL_1)$, $x_B = T_B(wS_1)$

Z

OFFSET=1

$wL_2 \in T_A$
und
$wS_2 \in T_B$

$x_A = T_A(wL_2)$, $x_B = T_B(wS_2)$

Z

ZR

OFFSET=2

$wL_3 \in T_A$
und
$wS_3 \in T_B$

$x_A = T_A(wL_3)$, $x_B = T_B(wS_3)$

Z

ZR → ZR

if ($x_{1N} \leq x_B$) then $n = x_B - x_{1N}$
else $n = x_B - x_{1N} + L_B$

**POS = 3 *(n* $L_A$ + $x_{1N}$) + OFFSET**

Zuordnung Z:

| $x_A$ | $x_{1N}$ |
|-------|----------|
| 0 | 0 |
| 1 | 3 |
| 2 | 1 |
| 3 | 4 |
| 4 | 2 |

Zwischenrechnung ZR:
if ($x_A > 0$) then
  $x_A = x_A - 1$
else
  $x_A = L_A - 1$

# FIG. 6

| Bitpattern | Wort wL1 | Wort wS1 | Wort wL2 | Wort wS2 | Wort wL3 | Wort wS3 | wL1 in $T_A$? | wL2 in $T_A$? | wL3 in $T_A$? | wS1 in $T_B$? | wS2 in $T_B$? | wS3 in $T_B$? | $x_A$ | $x_B$ | n | POS |
|---|---|---|---|---|---|---|---|---|---|---|---|---|---|---|---|---|
| 001101000 | 001000 | 110 | 011100 | 000 | 010100 | 010 | 1 | 0 | 0 | 1 | 0 | 0 | 0 | 0 | 0 | 0 |
| 011010000 | 010100 | 100 | 010000 | 110 | 111000 | 000 | 0 | 1 | 0 | 0 | 1 | 0 | 1 | 0 | 0 | 1 |
| 110100001 | 111000 | 001 | 101001 | 100 | 100001 | 110 | 0 | 0 | 1 | 0 | 0 | 1 | 2 | 0 | 0 | 2 |
| 101000011 | 100001 | 101 | 110001 | 001 | 010011 | 100 | 1 | 0 | 0 | 1 | 0 | 0 | 2 | 1 | 0 | 3 |
| 010000110 | 010011 | 000 | 000010 | 101 | 100010 | 001 | 0 | 1 | 0 | 0 | 1 | 0 | 3 | 1 | 0 | 4 |
| 100001100 | 100010 | 010 | 100110 | 000 | 000100 | 101 | 0 | 0 | 1 | 0 | 0 | 1 | 4 | 1 | 0 | 5 |
| 000011001 | 000100 | 011 | 000101 | 010 | 001101 | 000 | 1 | 0 | 0 | 1 | 0 | 0 | 4 | 2 | 0 | 6 |
| 000110010 | 001101 | 000 | 001000 | 011 | 001010 | 010 | 0 | 1 | 0 | 0 | 1 | 0 | 0 | 2 | 0 | 7 |
| 001100100 | 001010 | 100 | 011010 | 000 | 010000 | 011 | 0 | 0 | 1 | 0 | 0 | 1 | 1 | 2 | 0 | 8 |
| 011001001 | 010000 | 111 | 010101 | 100 | 110101 | 000 | 1 | 0 | 0 | 1 | 0 | 0 | 1 | 3 | 0 | 9 |
| 110010011 | 110101 | 001 | 100001 | 111 | 101011 | 100 | 0 | 1 | 0 | 0 | 1 | 0 | 2 | 3 | 0 | 10 |
| . | . | . | . | . | . | . | . | . | . | . | . | . | . | . | . | . |
| . | . | . | . | . | . | . | . | . | . | . | . | . | . | . | . | . |
| . | . | . | . | . | . | . | . | . | . | . | . | . | . | . | . | . |
| 010010100 | 010110 | 000 | 000010 | 110 | 101000 | 001 | 0 | 1 | 0 | 0 | 1 | 0 | 3 | 0 | 3 | 49 |
| 100101000 | 101000 | 010 | 101100 | 000 | 000100 | 110 | 0 | 0 | 1 | 0 | 0 | 1 | 4 | 0 | 3 | 50 |
| 001010001 | 000100 | 101 | 010001 | 010 | 011001 | 000 | 1 | 0 | 0 | 1 | 0 | 0 | 4 | 1 | 3 | 51 |
| 010100010 | 011001 | 000 | 001000 | 101 | 100010 | 010 | 0 | 1 | 0 | 0 | 1 | 0 | 0 | 1 | 3 | 52 |
| 101000100 | 100010 | 100 | 110010 | 000 | 010000 | 101 | 0 | 0 | 1 | 0 | 0 | 1 | 1 | 1 | 3 | 53 |
| 010001001 | 010000 | 011 | 000101 | 100 | 100101 | 000 | 1 | 0 | 0 | 1 | 0 | 0 | 1 | 2 | 3 | 54 |
| 100010011 | 100101 | 001 | 100001 | 011 | 001011 | 100 | 0 | 1 | 0 | 0 | 1 | 0 | 2 | 2 | 3 | 55 |
| 000100110 | 001011 | 000 | 001010 | 001 | 000010 | 011 | 0 | 0 | 1 | 0 | 0 | 1 | 3 | 2 | 3 | 56 |
| 001001101 | 000010 | 111 | 010111 | 000 | 010101 | 001 | 1 | 0 | 0 | 1 | 0 | 0 | 3 | 3 | 3 | 57 |
| 010011010 | 010101 | 010 | 000100 | 111 | 101110 | 000 | 0 | 1 | 0 | 0 | 1 | 0 | 4 | 3 | 3 | 58 |
| 100110100 | 101110 | 000 | 101010 | 010 | 001000 | 111 | 0 | 0 | 1 | 0 | 0 | 1 | 0 | 3 | 3 | 59 |

FIG. 7

EP 2 340 418 B1

FIG. 8

"Bitfolge"

Wort $w_1$    Wort $w_2$    Wort $w_3$

EP 2 340 418 B1

# FIG. 9

$L_A$, $L_B$, $L_C$: Längen der Codesequenzen A, B, C
$x_A$, $x_B$, $x_C$: Positionen in den Tabellen $T_A$, $T_B$ und $T_C$
p12: Position aus Schwebung von Code A und Code B
p23: Position aus Schwebung von Code B und Code C
$L12=KGV(L_A, L_B)$
$L23=KGV(L_B, L_C)$
POS: Gesamtposition = Schwebung aus Positionen p12 und p23

**Input:**
**Wörter w1, w2, w3**

**Auffüllen**

| | w1 | w2 | w3 |
|---|---|---|---|
| $T_A$ | | | |
| $T_B$ | | | |
| $T_C$ | | | |

**Zwischenrechnung ZR1:**
if ($x_A$>0) then
    $x_A = x_A - 1$
else
    $x_A = L_A - 1$

**Zwischenrechnung ZR2:**
if ($x_A$>0) then
    $x_A = x_A - 1$
else
    $x_A = L_A - 1$

if ($x_B$>0) then
    $x_B = x_B - 1$
else
    $x_B = L_B - 1$

OFFSET=0

| | w1 | w2 | w3 |
|---|---|---|---|
| $T_A$ | 1 | 0 | 0 |
| $T_B$ | 0 | 1 | 0 |
| $T_C$ | 0 | 0 | 1 |

OFFSET=1

| | w1 | w2 | w3 |
|---|---|---|---|
| $T_A$ | 0 | 0 | 1 |
| $T_B$ | 1 | 0 | 0 |
| $T_C$ | 0 | 1 | 0 |

OFFSET=2

| | w1 | w2 | w3 |
|---|---|---|---|
| $T_A$ | 0 | 1 | 0 |
| $T_B$ | 0 | 0 | 1 |
| $T_C$ | 1 | 0 | 0 |

ZR1

ZR2

if ($x_A \leq x_B$) then n12 = $x_B - x_A$
else n12 = $x_B - x_A + L_B$
→ p12 = n12·$L_A + x_A$

if ($x_B \leq x_C$) then n23 = $x_C - x_B$
else n23 = $x_C - x_B + L_C$
→ p23 = n23·$L_B + x_B$

$n_{ges} = (p_{23} - p_{12} + i*L_{23})/(L_{12} - L_{23})$
mit $n_{ges} \geq 0$ und ganzzahlig für kleinstes $i \in [0, L_{12} - L_{23}]$

$POS = 3*(n_{ges}*L_{12} + p_{12}) + OFFSET$

EP 2 340 418 B1

# FIG. 10

| Position | Bitpattern | Wort w1 | Wort w2 | Wort w3 | w1 in $T_A$? | w1 in $T_B$? | w1 in $T_C$? |
|---|---|---|---|---|---|---|---|
| 0 | 001010011101000 | 00010 | 01100 | 10110 | 1 | 0 | 0 |
| 1 | 010100111010000 | 01100 | 10110 | 00100 | 0 | 1 | 0 |
| 2 | 101001110100001 | 10110 | 00100 | 11001 | 0 | 0 | 1 |
| 3 | 010011101000011 | 00100 | 11001 | 01101 | 1 | 0 | 0 |
| 4 | 100111010000110 | 11001 | 01101 | 01000 | 0 | 1 | 0 |
| 5 | 001110100001101 | 01101 | 01000 | 10011 | 0 | 0 | 1 |
| 6 | 011101000011011 | 01000 | 10011 | 11011 | 1 | 0 | 0 |
| 7 | 111010000110110 | 10011 | 11011 | 10000 | 0 | 1 | 0 |
| 8 | 110100001101100 | 11011 | 10000 | 00110 | 0 | 0 | 1 |
| 9 | 101000011011000 | 10000 | 00110 | 10110 | 1 | 0 | 0 |
| . | . | . | . | . | . | . | . |
| . | . | . | . | . | . | . | . |
| . | . | . | . | . | . | . | . |
| 168 | 001011110001001 | 00100 | 01100 | 11011 | 1 | 0 | 0 |
| 169 | 010111100010010 | 01100 | 11011 | 01000 | 0 | 1 | 0 |
| 170 | 101111000100101 | 11011 | 01000 | 11001 | 0 | 0 | 1 |
| 171 | 011110001001010 | 01000 | 11001 | 10110 | 1 | 0 | 0 |
| 172 | 111100010010100 | 11001 | 10110 | 10000 | 0 | 1 | 0 |
| 173 | 111000100101001 | 10110 | 10000 | 10011 | 0 | 0 | 1 |
| 174 | 110001001010011 | 10000 | 10011 | 01101 | 1 | 0 | 0 |
| 175 | 100010010100111 | 10011 | 01101 | 00001 | 0 | 1 | 0 |
| 176 | 000100101001110 | 01101 | 00001 | 00110 | 0 | 0 | 1 |
| 177 | 001001010011101 | 00001 | 00110 | 11011 | 1 | 0 | 0 |
| 178 | 010010100111010 | 00110 | 11011 | 00010 | 0 | 1 | 0 |
| 179 | 100101001110100 | 11011 | 00010 | 01100 | 0 | 0 | 1 |

EP 2 340 418 B1

| w2 in T_A? | w2 in T_B? | w2 in T_C? | w3 in T_A? | w3 in T_B? | w3 in T_C? | X_A | X_B | X_C | n12 | p12 | n23 | p23 | n ges | POS |
|---|---|---|---|---|---|---|---|---|---|---|---|---|---|---|
| 0 | 1 | 0 | 0 | 0 | 1 | 0 | 0 | 0 | 0 | 0 | 0 | 0 | 0 | 0 |
| 0 | 0 | 1 | 1 | 0 | 0 | 1 | 0 | 0 | 0 | 0 | 0 | 0 | 0 | 1 |
| 1 | 0 | 0 | 0 | 1 | 0 | 1 | 1 | 0 | 0 | 0 | 0 | 0 | 0 | 2 |
| 0 | 1 | 0 | 0 | 0 | 1 | 1 | 1 | 1 | 0 | 1 | 0 | 1 | 0 | 3 |
| 0 | 0 | 1 | 1 | 0 | 0 | 2 | 1 | 1 | 0 | 1 | 0 | 1 | 0 | 4 |
| 1 | 0 | 0 | 0 | 1 | 0 | 2 | 2 | 1 | 0 | 1 | 0 | 1 | 0 | 5 |
| 0 | 1 | 0 | 0 | 0 | 1 | 2 | 2 | 2 | 0 | 2 | 0 | 2 | 0 | 6 |
| 0 | 0 | 1 | 1 | 0 | 0 | 3 | 2 | 2 | 0 | 2 | 0 | 2 | 0 | 7 |
| 1 | 0 | 0 | 0 | 1 | 0 | 3 | 3 | 2 | 0 | 2 | 0 | 2 | 0 | 8 |
| 0 | 1 | 0 | 0 | 0 | 1 | 3 | 3 | 0 | 0 | 3 | 0 | 3 | 0 | 9 |
| . | . | . | . | . | . | . | . | . | . | . | . | . | . | . |
| . | . | . | . | . | . | . | . | . | . | . | . | . | . | . |
| . | . | . | . | . | . | . | . | . | . | . | . | . | . | . |
| 0 | 1 | 0 | 0 | 0 | 1 | 1 | 0 | 2 | 3 | 16 | 2 | 8 | 2 | 168 |
| 0 | 0 | 1 | 1 | 0 | 0 | 2 | 0 | 2 | 3 | 16 | 2 | 8 | 2 | 169 |
| 1 | 0 | 0 | 0 | 1 | 0 | 2 | 1 | 2 | 3 | 16 | 2 | 8 | 2 | 170 |
| 0 | 1 | 0 | 0 | 0 | 1 | 2 | 1 | 0 | 3 | 17 | 2 | 9 | 2 | 171 |
| 0 | 0 | 1 | 1 | 0 | 0 | 3 | 1 | 0 | 3 | 17 | 2 | 9 | 2 | 172 |
| 1 | 0 | 0 | 0 | 1 | 0 | 3 | 2 | 0 | 3 | 17 | 2 | 9 | 2 | 173 |
| 0 | 1 | 0 | 0 | 0 | 1 | 3 | 2 | 1 | 3 | 18 | 2 | 10 | 2 | 174 |
| 0 | 0 | 1 | 1 | 0 | 0 | 4 | 2 | 1 | 3 | 18 | 2 | 10 | 2 | 175 |
| 1 | 0 | 0 | 0 | 1 | 0 | 4 | 3 | 1 | 3 | 18 | 2 | 10 | 2 | 176 |
| 0 | 1 | 0 | 0 | 0 | 1 | 4 | 3 | 2 | 3 | 19 | 2 | 11 | 2 | 177 |
| 0 | 0 | 1 | 1 | 0 | 0 | 0 | 3 | 2 | 3 | 19 | 2 | 11 | 2 | 178 |
| 1 | 0 | 0 | 0 | 1 | 0 | 0 | 0 | 2 | 3 | 19 | 2 | 11 | 2 | 179 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0368605 B1